# FASCICULE DE BREVET EUROPEEN

(11) **EP 2 593 262 B1**
(45) Date de publication et mention de la délivrance du brevet: **02.07.2014**
(21) Numéro de dépôt: 11723565.5
(22) Date de dépôt: 05.05.2011
(51) Int. Cl.: B23K 9/025, B23K 9/16, B23K 9/173, B23K 9/20, B23K 35/38, B23K 9/23

(54) **PROCEDE DE SOUDAGE A L'ARC, AVEC GAZ INERTE CONTENANT DE L'AZOTE, DE PIECES METALLIQUES ALUMINIEES**
VERFAHREN ZUM LICHTBOGENSCHWEISSEN VON ALUMINIUMBESCHICHTETEN METALLTEILEN MIT EINEM STICKSTOFFHALTIGEN INERTGAS
METHOD FOR ARC-WELDING ALUMINUM-COATED METAL PARTS USING AN INERT GAS CONTAINING NITROGEN

(30) Priorité: 13.07.2010 FR 1055688
(43) Date de publication de la demande: 22.05.2013
(73) Titulaire: L'Air Liquide Société Anonyme pour l'Etude et l'Exploitation des Procédés Georges Claude, 75007 Paris (FR)
(72) Inventeur: BERTIN, Pascal, 27140 Gisors (FR); DUBET, Olivier, F-78210 Saint Cyr l'Ecole (FR); GADREY, Sébastien, 91380 Chilly Mazarin (FR); RICHARD, Frédéric, F-95620 Parmain (FR)
(74) Mandataire: Pittis, Olivier
(86) Numéro de dépôt international: PCT/FR2011/051014
(87) Numéro de publication internationale: WO 2012/022862

(56) Documents cités:
- EP-A1- 1 878 531
- JP-A- 2010 110 787
- US-A- 3 111 434
- US-A1- 2002 008 094
- US-A1- 2009 220 815

## Description

L'invention porte sur un procédé de soudage à l'arc électrique de pièces en acier comprenant un revêtement surfacique à base d'aluminium conformément au préambule de la revendication 1 (voir, par example JP 2010/110 787 A).

Certains aciers revêtus d'aluminium ou d'un alliage à base d'aluminium, tel les aciers USIBOR^{™}, présentent des caractéristiques mécaniques très élevées après emboutissage à chaud et sont, de ce fait, de plus en plus utilisés dans le domaine de la construction de véhicules automobiles, lorsqu'un gain de poids est recherché. En effet, ces aciers sont conçus pour être traités thermiquement puis trempés pendant l'opération d'emboutissage à chaud et les caractéristiques mécaniques qui en découlent permettent un allégement très significatif du poids du véhicule par rapport à un acier à haute limite d'élasticité standard. Ils sont principalement utilisés pour fabriquer des poutres de pare-chocs, des renforts de porte, des pieds milieu, des montants de baie...

D'autres aciers revêtus d'aluminium ou d'alliage d'aluminium sont également utilisés pour leurs propriétés de résistance à la corrosion et à la chaleur. On peut citer notamment les aciers Aluzinc® utilisés pour les constructions extérieurs ou les coffrets électriques, Alusi® et Alupur®pour les pots d'échappement, les écrans thermiques, habillage de chaudières, conduits de cheminées, applications en centrale électrique ou en pétrochimie.

En théorie, tous les procédés de soudage à l'arc conventionnels, tels les procédés de soudage MIG, MAG ou encore de brasage, peuvent être utilisés pour assembler ces aciers aluminiés.

Toutefois, il a été observé en pratique qu'après une opération de soudage à l'arc de pièces revêtues d'aluminium ou d'un alliage d'aluminium, une phase moins résistante en traction apparaissait en zone fondue de l'assemblage soudé. Cette phase est constituée de composés intermétalliques ou de ferrite delta.

Dans le cas de l'Usibor, après analyse, il a été déterminé que cette phase contient un pourcentage non négligeable d'aluminium qui provoque la non-transformation austénitique de l'acier lors de son traitement avant emboutissage, c'est-à-dire que cette phase reste sous forme de ferrite Delta et il en résulte une dureté moindre que le reste de la pièce ayant subit une transformation martensitique/bainitique.

Or, la phase non transformée peut entraîner, des fissures, voire une rupture de l'assemblage. En effet, ces zones contenant la phase ferrite Delta, ayant incorporé de l'aluminium, présentent une résistance de la soudure plus faible que celle du métal de base.

Un procédé de soudage hybride laser-arc de pièces d'acier avec revêtement surfacique à base d'aluminium a déjà été proposé par le document EP-A-1878531.

Bien que ce procédé donne de bons résultats dans certains cas, il est de mise en oeuvre compliquée car nécessite de combiner les effets d'un arc électrique à ceux d'un faisceau laser.

De plus, il oblige à investir à la fois dans une source de soudage à l'arc et surtout dans une source de soudage laser, ce qui engendre un coût important et des opérations de maintenance supplémentaires pouvant nuire à la productivité globale du procédé.

Et les applications visées en MIG sont le soudage de goujons, ou éléments divers en acier sur des tôles aluminiées, ou le soudage de deux tôles entre elle comme dans le cas de pots d'échappement.

Le problème qui se pose est dès lors de proposer un procédé de soudage de mise en oeuvre simple permettant d'obtenir de bonnes propriétés mécaniques du joint soudé, en particulier de traction, lors d'une opération de soudage de pièces en acier revêtues d'aluminium ou d'un alliage d'aluminium.

La solution de l'invention est un procédé de soudage à l'arc électrique d'au moins une pièce acier comprenant un revêtement surfacique à base d'aluminium tel que défini dans la revendication 1.

Le mélange gazeux utilisé dans le procédé de l'invention est donc formé uniquement d'argon, d'hélium ou les deux additionné d'azote de manière à constituer un mélange gazeux binaire Ar/N₂ ou He/N₂, ou un mélange ternaire Ar/He/N₂.

Comme déjà stipulé, et conformément à l'invention, par « procédé de soudage à l'arc électrique », on entend un procédé de soudage dans le cadre duquel la fusion du métal est opérée uniquement par un arc électrique, ce qui exclut donc la présence de tout faisceau laser mis en jeu pour fondre le métal de la ou des pièces à souder. Il s'ensuit alors que les procédés de soudage hybride arc/laser sont exclus du champ de la présente invention, un arc seul ne réagissant pas de la même manière qu'un arc assisté d'un faisceau laser.

Selon le cas, le procédé de l'invention peut comprendre l'une ou plusieurs des caractéristiques suivantes :
- le gaz de protection contient au moins 0,025% et au plus 20% en volume d'azote.
- le gaz de protection contient au moins 0,025% et au plus 15% en volume d'azote.
- le gaz de protection contient au moins 1 % en volume d'azote.
- le gaz de protection contient au moins 2% en volume d'azote.
- le gaz de protection contient au moins 3% en volume d'azote.
- le gaz de protection contient moins de 10 % en volume d'azote.
- le gaz de protection contient au moins 4 % en volume d'azote.
- le gaz de protection contient au plus 9% en volume d'azote.
- le gaz de protection contient au plus 8% en volume d'azote.
- le gaz de protection contient au moins 5% en volume d'azote
- le gaz de protection contient au plus 7% en volume d'azote.
- le gaz de protection contient au moins 5,5% en volume d'azote et au plus 6,5% en volume d'azote.
- le gaz de protection contient de l'ordre de 6% en volume d'azote.
- la ou les pièces en acier comprennent un revêtement surfacique à base d'aluminium ayant une épaisseur comprise entre 5 et 100 µm, de préférence inférieure ou égale à 50 µm. Le revêtement recouvre au moins une surface de la ou des pièces mais pas ou quasiment pas de revêtement à base d'aluminium n'est présent sur les rebords d'extrémités de la ou desdites pièces, c'est-à-dire sur les tranches d'une tôle par exemple.
- la ou les pièces métalliques sont en acier avec un revêtement surfacique à base d'aluminium et de silicium (Al/Si).
- la ou les pièces métalliques comprennent un revêtement surfacique à base d'aluminium et de silicium contenant une proportion d'aluminium entre 5 et 100 fois supérieure à celle de silicium, par exemple une proportion d'aluminium de 90% en poids et une proportion de silicium de 10% en poids, soit une couche de revêtement surfacique comprenant 9 fois plus d'aluminium que de silicium.
- la ou les pièces métalliques comprennent un revêtement surfacique à base d'aluminium et de silicium contenant une proportion d'aluminium entre 5 et 50 fois supérieure à celle de silicium, notamment une proportion d'aluminium entre 5 et 30 fois supérieure à celle de silicium, en particulier une proportion d'aluminium entre 5 et 20 fois supérieure à celle de silicium.
- il s'agit d'un procédé de soudage MIG (Mteal Inert Gas) avec fil d'apport fusible, par exemple un fil plein ou un fil fourré.
- la ou les pièces à souder sont un ou des éléments de véhicule automobile.
- la tension de soudage mise en oeuvre est comprise entre 14 et 35 V.
- l'intensité de soudage mise en oeuvre est comprise entre 80 et 300 A.
- la ou les pièces à souder ont une épaisseur comprise entre 0.6 et 2.5 mm, de préférence entre 1 et 2 mm. On considère l'épaisseur au niveau du plan de joint à réaliser, c'est-à-dire à l'endroit où le métal est fondu par l'arc électrique pour former le joint de soudage, par exemple au niveau du bord d'extrémité de la ou des pièces à souder.
- la pression du gaz entre 2 et 15 bar, de préférence inférieure à 12 bar, en particulier de l'ordre de 4 à 8 bar.
- le débit du gaz est inférieur à 30 1/min, en général inférieur à 25 1/min, typiquement compris entre environ 15 et 20 1/min selon l'application considérée.
- l'on soude plusieurs pièces l'une avec l'autre, typiquement deux pièces ; lesdites pièces pouvant être identiques ou différentes, notamment en termes de formes, d'épaisseurs etc...
- les pièces sont en acier fortement allié (>5% en poids d'éléments d'alliage), faiblement allié (<5% en poids d'éléments d'alliage) ou non alliés, par exemple un acier au carbone.
- le fil de soudage est un fil plein ou un fil fourré.
- le fil de soudage a un diamètre entre 0,5 et 5 mm, typiquement entre environ 0,8 et 2,5 mm.

L'invention va maintenant être mieux comprise grâce à la description suivante.

La solution proposée est donc de réaliser un soudage des pièces aluminiées, c'est-à-dire comprenant un revêtement surfacique d'aluminium ou de préférence d'un alliage d'aluminium, tel de préférence un revêtement Al/Si, au moyen d'un arc électrique seul (i.e. sans présence de faisceau laser) et d'un gaz de protection particulier.

Pour ce faire, selon la présente invention, on met en oeuvre, pendant le soudage à l'arc, un gaz de protection permettant d'obtenir une stabilisation de l'arc sur l'aluminium et de diminuer la mise en solution du revêtement à base d'aluminium dans le métal fondu de la ou les pièces métallique à souder, c'est-à-dire dans le joint de soudure.

Ce gaz de protection particulier est composé d'argon et/ou hélium avec une addition volumique d'azote de 0.025% à 30%, de préférence de 3% à 10% d'azote.

Ce mélange gazeux entraîne par réaction entre l'aluminium et l'azote, la formation de nitrures d'aluminium qui ont une meilleure émissivité électrique, diminuant ainsi les mouvements d'arc et la taille du spot cathodique, donc conduisant à une stabilisation de l'arc de soudage.

De plus, les nitrures d'aluminium surnagent à la surface du bain, empêchant ainsi la mise en solution de l'aluminium présent à la surface de la pièce. Il en résulte une suppression ou au moins une diminution notable de l'incorporation d'aluminium dans la soudure, donc une amélioration de la résistance en traction du fait d'une disparition totale ou quasi-totale de la phase sous forme de ferrite Delta ou de composés intermétalliques habituellement observée.

Le mélange gazeux utilisé peut être réalisé soit directement sur site par mélange des constituants du mélange souhaité dans des proportions désirées au moyen d'un mélangeur de gaz, soit être sous forme pré-conditionnée, c'est-à-dire réalisé en usine de conditionnement puis ensuite acheminé sur son lieu d'utilisation dans des récipients de gaz adéquats, telles des bouteilles de gaz de soudage.

### Exemples

Le procédé de l'invention a donné de bons résultats lors d'une opération de soudage à l'arc MIG manuel de pièces Usibor 1500^{™}, c'est-à-dire de pièces en acier revêtu d'une couche de 30 µm d'un alliage aluminium/silicium (Al/Si) en proportions respectives de 90% et de 10% en poids.

Les pièces soudées ont une épaisseur de 1.2 mm.

Dans le cadre des essais réalisés, le gaz employé (% en volume) qui est distribué à un débit de 201/min et à une pression de 4 bar, est :
- Essai A (comparatif) : argon pur (100%).
- Essai B (invention): mélange formé d'argon et de 2% d'azote (N₂).
- Essai C (invention): mélange formé d'argon et de 4% de N₂.
- Essai D (invention): mélange formé d'argon et de 6% de N₂.
- Essai E (invention): mélange formé d'argon et de 8% de N₂.
- Essai F (comparatif) : mélange formé d'argon et de 8% en volume de CO₂.

La torche utilisée est une torche MIG commercialisée par la société DINSEE alimentée par un fil d'apport de type Nertalic 88 (ER 100 SG: AWS, A 5.28) commercialisé par la société Air Liquide Welding, de 1.2 mm de diamètre, qui est délivré à une cadence de 2,8 à 3,5 m/min.

La tension de soudage est de 15 V environ et l'intensité est d'environ 128 A ; elles sont obtenues grâce à un générateur de type Digi@wave 400 (Arc court/Arc court +) en mode synergique (EN 131) commercialisé par Air Liquide Welding France. La vitesse de soudage atteinte est de 20 cm/min.

Les pièces à souder forment entre elles un angle de 45° environ et le plan de joint formé par le sommet de l'angle

Les résultats obtenus montrent l'influence notable de l'azote puisque la présence de N₂ dans l'argon conduit à de bien meilleurs résultats que l'utilisation d'argon seul.

En effet, avec l'argon seul (Essai A), l'arc est instable et le transfert erratique, c'est-à-dire que de grosses gouttes de métal fondu se forment. Les assemblages réalisés sous argon ont tous un aspect dégradé. On peut notamment remarquer un manque de mouillage en lisière des cordons et ceux-ci présentent une surépaisseur importante. De plus, durant le soudage, on assiste à la formation de grosses projections de gouttelettes de métal en fusion, ainsi que de beaucoup fumées.

A l'inverse, avec les mélanges Ar/N₂ selon l'invention, on assiste à une amélioration notable des résultats, laquelle amélioration augmente proportionnellement à la teneur en N₂ dans le mélange jusqu'à environ 6% à 8% dans les conditions des essais.

Ainsi, avec le mélange Ar/N₂ à 2% de N₂ (Essai B), le transfert de métal est plus stable que dans l'Essai A mais le cordon n'est pas totalement exempt de tout défaut, bien que l'amélioration soit déjà remarquable. En effet, la stabilité d'arc peut encore être ponctuellement perturbée, bien que les ruptures d'arc soient très peu présentes, voire inexistantes. Le phénomène de formation de grosses gouttes pendant le soudage diminue également. L'addition de 2% d'azote à l'argon améliore en fait surtout le mouillage haut/bas du cordon.

En augmentant l'addition d'azote à 4% dans l'argon (Essai C), sans changer les autres paramètres, notamment électriques, on constate une amélioration générale de l'aspect de surface et un mouillage acceptable en lisière haut/bas du cordon, ainsi qu'une amélioration de l'aspect de surface du cordon : faibles stries de solidification et surépaisseur peu importante au centre. Ces résultats sont satisfaisants et reproductibles. La fusion du fil est bonne avec un transfert correct et plus stable. Les résultats d'assemblage en angle présentent un mouillage acceptable en lisière haut/bas du cordon. Le bain reste par contre encore un peu « froid » et peut être difficile à manier dans certaines conditions.

L'augmentation de l'addition d'azote à 6% (Essai D) conduit à une amélioration générale et encore plus notable de l'aspect de surface et un bon mouillage en lisière haut/bas du cordon. La surface du cordon présente uniquement de très légères stries ainsi qu'une très faible surépaisseur centrale.

Dans l'Essai E, l'argon est additionné de 8% d'azote. La rugosité de la surface du cordon a encore diminué, le mouillage est bon et il y a peu de projections adhérentes. D'un point de vue opératoire, l'addition de 8 % d'azote dans l'argon permet d'obtenir un transfert stable avec une bonne fusion du fil. Il est intéressant de noter qu'avec ce mélange, on obtient une réelle « souplesse » opératoire car il permet un réglage de paramètres (variation de vitesse fil ou variation de tension) qui n'est pas possible sous argon pur et pas forcément aussi aisé avec les autres mélanges argon/azote testés.

Enfin, dans l'Essai F (comparatif), l'addition de 8% de CO₂ dans l'argon engendre une stabilité d'arc nécessaire pour réaliser l'assemblage mais l'aspect de cordon est dégradé et il subsiste des plages de ferrite Delta néfaste aux propriétés mécaniques de l'assemblage. L'addition de CO₂ ne permet donc pas de résoudre le problème lié à la formation de ferrite Delta, contrairement à l'azote.

Ces résultats montrent clairement qu'une addition d'azote dans l'argon permet d'améliorer fortement la qualité du soudage des aciers revêtus d'une couche surfacique d'alliage aluminium/silicium. L'amélioration est d'autant plus notable que la teneur en azote augmente, ce qui inciterait à utiliser au moins 8% d'azote dans l'argon.

Toutefois, des contrôles radiographiques réalisés en parallèle ont montré que cette teneur en azote ne devait pas être excessive lorsque l'on souhaite également éviter la formation de porosités dans le métal déposé. En effet, les contrôles radiographiques effectués sur les cordons obtenus dans les Essais B à E montrent que pour des teneurs en azote allant jusqu'à 6% environ, le taux de porosités est acceptable, c'est-à-dire conforme aux préconisations de certaines normes, telles les normes NF-EN 287-1, NF EN ISO 5817, EN 462-1 W10.

Par contre, à partir d'une addition de 8% d'azote dans l'argon (essai E), on rencontre parfois des porosités en début des cordons de soudure. Ces porosités font que les assemblages réalisés avec ce pourcentage peuvent être non conformes à la norme.

Il est donc préférable de limiter la teneur en azote à environ 6% ou prévoir des appendices de début et fin de cordon, là où les porosités ont été rencontrées.

En outre, des contrôles micrographiques ont également été réalisés de manière à visualiser la structure des cordons après soudage.

Ces contrôles ont fait apparaître pour les cordons obtenus dans le cadre de l'Essai A, une phase ductile sous forme de plages blanches due à la mise en solution d'aluminium et de silicium provenant de la couche Al/Si recouvrant les pièces. Ces plages contiennent de la ferrite Delta qui nuit aux propriétés mécaniques des assemblages soudés.

A l'inverse, après examen des cordons obtenus dans le cadre des essais B à E, il apparaît que les plages de ferrite Delta sont significativement diminuées par l'ajout d'azote dans le gaz de protection. A partir de 4% d'azote, les plages de ferrite Delta n'apparaissent plus en zone fondue.

Ceci démontre l'intérêt de l'ajout d'azote dans l'argon lorsqu'on souhaite éviter la formation de plages de ferrite delta dans les cordons de soudure réalisés sur des pièces en acier revêtues d'une couche Al/Si, tels les aciers de type Usibor. Il est à noter que des essais complémentaires ont montré que tout ou partie de l'argon pouvait être remplacé par de l'hélium, sans perte des bénéfices résultants de l'addition d'azote.

De là, on utilise une proportion d'azote généralement inférieure à 10% en volume, de préférence entre 4 et 8% en volume, avantageusement entre environ 5 et 7% en volume, et plus particulièrement de l'ordre de 6% en volume, le reste étant de l'argon et/ou de l'hélium.

## Revendications

1. Procédé de soudage à l'arc électrique d'au moins une pièce métallique comprenant un revêtement surfacique à base d'aluminium, mettant en oeuvre un gaz de protection, dans lequel la fusion du métal de ladite pièce métallique est opérée uniquement par l'arc électrique, à l'exclusion de tout faisceau laser, **caractérisé en ce que** le gaz de protection est constitué d'un mélange d'argon et/ou d'hélium, et d'azote, ledit gaz de protection contenant au moins 0,025% et au plus 30% en volume d'azote.

2. Procédé selon la revendication 1, **caractérisé en ce que** le gaz de protection contient au moins 0,025% et au plus 20% en volume d'azote.

3. Procédé selon l'une des revendications précédentes, **caractérisé en ce que** le gaz de protection contient au moins 3% en volume d'azote ou moins de 10 % en volume d'azote.

4. Procédé selon l'une des revendications précédentes, **caractérisé en ce que** le gaz de protection contient au moins de 4 % en volume d'azote et au plus 8% en volume d'azote.

5. Procédé selon l'une des revendications précédentes, **caractérisé en ce que** le gaz de protection contient de 5 à 7% en volume d'azote.

6. Procédé selon l'une des revendications précédentes, **caractérisé en ce que** la ou les pièces métalliques comprennent un revêtement surfacique à base d'aluminium ayant une épaisseur comprise entre 5 et 100 µm, de préférence inférieure ou égale à 50 µm.

7. Procédé selon l'une des revendications précédentes, **caractérisé en ce que** la ou les pièces métalliques sont en acier avec un revêtement surfacique à base d'aluminium et de silicium (Si/Al).

8. Procédé selon l'une des revendications précédentes, **caractérisé en ce que** la ou les pièces métalliques comprennent un revêtement surfacique à base d'aluminium et de silicium contenant une proportion d'aluminium entre 5 et 100 fois supérieure à celle de silicium.

9. Procédé selon l'une des revendications précédentes, **caractérisé en ce que** la ou les pièces métalliques comprennent un revêtement surfacique à base d'aluminium et de silicium contenant une proportion d'aluminium entre 5 et 50 fois supérieure à celle de silicium.

10. Procédé selon l'une des revendications précédentes, **caractérisé en ce qu'**il s'agit d'un procédé de soudage MIG avec fil d'apport fusible.

11. Procédé selon l'une des revendications précédentes, **caractérisé en ce que** la ou les pièces à souder sont un ou des éléments de véhicule automobile.

12. Procédé selon l'une des revendications précédentes, **caractérisé en ce que** l'on soude plusieurs pièces l'une avec l'autre, typiquement deux pièces.

## Patentansprüche

1. Lichtbogenschweißverfahren mindestens eines metallischen Teils, umfassend eine Oberflächenbeschichtung auf Basis von Aluminium, wobei ein Schutzgas eingesetzt wird, bei dem das Schmelzen des Metalls des metallischen Teils nur durch den Lichtbogen unter Ausschluss jeglichen Laserstrahls erfolgt, **dadurch gekennzeichnet, dass** das Schutzgas von einem Gemisch aus Argon und/oder Helium und Stickstoff gebildet ist, wobei das Schutzgas mindestens 0,025 Vol.-% und höchstens 30 Vol.-% Stickstoff enthält.

2. Verfahren nach Anspruch 1, **dadurch gekennzeichnet, dass** das Schutzgas mindestens 0,025 Vol.-% und höchstens 20 Vol.-% Stickstoff enthält.

3. Verfahren nach einem der vorhergehenden Ansprüche, **dadurch gekennzeichnet, dass** das Schutzgas mindestens 3 Vol.-% Stickstoff oder mindestens 10 Vol.-% Stickstoff enthält.

4. Verfahren nach einem der vorhergehenden Ansprüche, **dadurch gekennzeichnet, dass** das Schutzgas mindestens 4 Vol.-% Stickstoff und höchstens 8 Vol.-% Stickstoff enthält.

5. Verfahren nach einem der vorhergehenden Ansprüche, **dadurch gekennzeichnet, dass** das Schutzgas 5 bis 7 Vol.-% Stickstoff enthält.

6. Verfahren nach einem der vorhergehenden Ansprüche, **dadurch gekennzeichnet, dass** der oder die metallischen Teile eine Oberflächenbeschichtung auf Basis von Aluminium mit einer Dicke zwischen 5 und 100 µm, vorzugsweise kleiner oder gleich 50 µm, umfassen.

7. Verfahren nach einem der vorhergehenden Ansprüche, **dadurch gekennzeichnet, dass** der oder die metallischen Teile aus Stahl mit einer Oberflächenverkleidung auf Basis von Aluminium und Silizium (Si/Al) sind.

8. Verfahren nach einem der vorhergehenden Ansprüche, **dadurch gekennzeichnet, dass** der oder die metallischen Teile eine Oberflächenbeschichtung auf Basis von Aluminium und Silizium umfassen, mit einem zwischen 5- und 100-mal größeren Anteil an Aluminium als an Silizium.

9. Verfahren nach einem der vorhergehenden Ansprüche, **dadurch gekennzeichnet, dass** der oder die metallischen Teile eine Oberflächenbeschichtung auf Basis von Aluminium und Silizium umfassen, mit einem zwischen 5- und 50-mal größeren Anteil an Aluminium als an Silizium.

10. Verfahren nach einem der vorhergehenden Ansprüche, **dadurch gekennzeichnet, dass** es sich um ein MIG-Schweißverfahren mit einem schmelzbaren Schweißdraht handelt.

11. Verfahren nach einem der vorhergehenden Ansprüche, **dadurch gekennzeichnet, dass** der oder die zu schweißenden Teile ein oder mehrere Kraftfahrzeugelemente sind.

12. Verfahren nach einem der vorhergehenden Ansprüche, **dadurch gekennzeichnet, dass** mehrere Teile, typischerweise zwei, miteinander verschweißt werden.

## Claims

1. Method for electric-arc welding at least one metal part comprising an aluminium-based surface coating, using a shielding gas, the melting of the metal of said metal part being carried out solely by the electric arc, without a laser beam, **characterised in that** the shielding gas consists of a mixture of argon and/or helium, and nitrogen, said shielding gas containing at least 0.025 % and at most 30 % by volume of nitrogen.

2. Method according to claim 1, **characterised in that** the shielding gas contains at least 0.025 % and at most 20 % by volume of nitrogen.

3. Method according to any of the preceding claims, **characterised in that** the shielding gas contains at least 3 % by volume of nitrogen or less than 10 % by volume of nitrogen.

4. Method according to any of the preceding claims, **characterised in that** the shielding gas contains at least 4 % by volume of nitrogen and at most 8 % by volume of nitrogen.

5. Method according to any of the preceding claims, **characterised in that** the shielding gas contains from 5 % to 7 % by volume of nitrogen.

6. Method according to any of the preceding claims, **characterised in that** the metal part or parts comprise an aluminium-based surface coating having a thickness between 5 and 100 µm, preferably less than or equal to 50 µm.

7. Method according to any of the preceding claims, **characterised in that** the metal part or parts are made of steel with an aluminium- and silicon-based (Si/AI) surface coating.

8. Method according to any of the preceding claims, **characterised in that** the metal part or parts comprise an aluminium- and silicon-based surface coating containing a proportion of aluminium between 5 and 100 times greater than that of silicon.

9. Method according to any of the preceding claims, **characterised in that** the metal part or parts comprise an aluminium- and silicon-based surface coating containing a proportion of aluminium between 5 and 50 times greater than that of silicon.

10. Method according to any of the preceding claims, **characterised in that** it is a MIG welding process with consumable filler wire.

11. Method according to any of the preceding claims, **characterised in that** the part or parts to be welded are one or more components of a motor vehicle.

12. Method according to any of the preceding claims, **characterised in that** a plurality of parts are welded to one another, typically two parts.
